# EUROPEAN PATENT SPECIFICATION

(11) **EP 1 655 912 B1**
(45) Date of publication and mention of the grant of the patent: **07.11.2007**
(21) Application number: 05256642.9
(22) Date of filing: 26.10.2005
(51) Int. Cl.: H04L 12/56, H04L 12/40

(54) **Method and apparatus for supporting multiple wireless universal serial bus (USB) hosts in coordinator-based wireless network**
Verfahren und Vorrichtung zur Unterstützung verschiedener mobiler Hosts in einem universellen seriellen Bus (USB) in einem koordinatorbasierten drahtlosen Netzwerk
Méthode et dispositif pour le support de plusieurs hôtes sur un Bus seriel universel (USB) dans un réseau sans fils basé sur un coordonnateur

(30) Priority: 03.11.2004 KR 2004088896
(43) Date of publication of application: 10.05.2006
(73) Proprietor: Samsung Electronics Co., Ltd., Suwon-si, Gyeonggi-Do (KR)
(72) Inventor: Hong, Jin-woo c/o 104-702 1-danji Apt, Suwon-si, Gyeonggi-do (KR); Bae, Dae-gyu c/o 708-101 7-danji Apt, Suwon-si, Gyeonggi-do (KR); Sung, Hyun-ah c/o 104-201 Doosan Apt., Seoul (KR)
(74) Representative: Davies, Robert Ean

(56) References cited:
- WO-A-01/31459
- WO-A-03/030459
- US-A- 6 112 229
- US-A1- 2003 043 771
- US-A1- 2003 086 388
- "Chapter 4: Architectural Overview" UNIVERSAL SERIAL BUS SPECIFICATION, no. revision 20, 27 April 2000 (2000-04-27), pages 15-24, XP002285377

## Description

Apparatuses and methods consistent with the present invention relate to a wireless universal serial bus. More particularly, the present invention relates to a method and an apparatus for supporting a plurality of wireless universal serial bus hosts in a coordinator-based wireless network.

Recent development of communication and network technologies has lead to widespread use of wireless networks, which use signals of various frequency bands. This is a shift from a wired network, which uses wired media such as coaxial cables and optical cables.

The wireless network can be classified into two types: infrastructure mode and ad hoc mode.

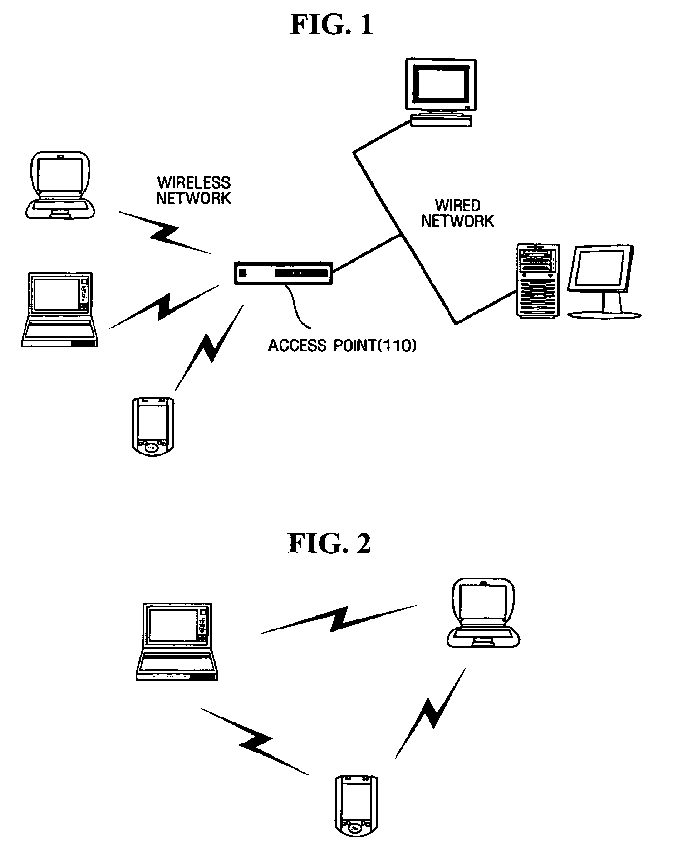

As illustrated in Figure 1, the infrastructure mode wireless network comprises an access point 110, whereas the ad hoc wireless network has no access point, as illustrated in Figure 2.

The infrastructure mode wireless network connects a wireless network with a wired network, or allows the access point 110 to relay data between wireless network apparatuses belonging to a wireless network. Accordingly, all the data is transmitted by way of the access point 110 in the infrastructure mode wireless network environment.

In the ad hoc mode wireless network, wireless network apparatuses belonging to a single wireless network transmit data directly to each other, without passing through a relay device such as an access point.

The ad hoc mode wireless network may be further classified into two types. In one type, a wireless network apparatus randomly selected among the wireless network apparatuses belonging to a single wireless network functions as a coordinator that allocates time during which data is transmitted to the other wireless network apparatuses (hereinafter referred to as "channel time"), and the other wireless network apparatuses can transmit data during the channel time allocated to them.

In another type, no coordinator exists, and the wireless network apparatuses can transmit data at any time according to a result of negotiation processed among them.

In the former case, that is, in the network type having a wireless network apparatus functioning as a coordinator (hereinafter referred to as "coordinator-based wireless network"), a single independent wireless network is constructed based on the coordinator. In this respect, when a plurality of coordinator-based wireless networks exist in a region, each has an identifier to distinguish them.

For communications in this wireless network environment, a wireless interface is needed in order to connect respective network apparatuses in a wireless manner. Such wireless interfaces as IrDA and Bluetooth are applied to electronic appliances. Research has begun on a wireless universal serial bus (WUSB) technology to make USB, which is a conventional wired network technology, wireless.

USB is a standardized wired interface that connects peripheral devices including a mouse, printer, modem and speaker with a computer system. Compared with other wired interfaces, USB is better and, for this reason, it has been extensively applied to personal computers (PCs) and related peripherals. USB technology has been recently used to transmit data between cell phones/digital cameras and PCs.

To describe the advantages of USB in brief, a general serial port has a data transmission rate less than 100Kbps whereas USB can support a data transmission speed of 12Mbps. When USB is used as an interface between network apparatuses, the burden of installing complex adaptors is alleviated. In addition, a maximum of 127 apparatuses can be interconnected when using USB. Further, there is no need to install separate software or hardware when peripheral apparatuses are connected to a PC. Since all the peripheral apparatuses are connected by the same connector, the number of ports can be sharply reduced. Further, USB installation is easy and use of USB enables a compact portable PC to be manufactured.

WUSB has the advantages of USB and adapts to a network environment that is shifted from a wired network to a wireless network. WUSB may be based on a coordinator-based wireless network. In the WUSB technologies, researched and developed to date, based on the coordinator-based wireless network, only a coordinator that can allocate channel times to other apparatuses can be a WUSB host. According to the conventional art, a single WUSB host exists in a single coordinator-based wireless network.

For example, when a plurality of PCs constitute a single coordinator-based wireless network, only one PC functioning as a coordinator functions as a WUSB host and is connected to peripherals supporting WUSB. In this case, if any other PC intends to function as a WUSB host, the concerned PC has to construct a separate independent coordinator-based wireless network in order to become a coordinator of the constructed coordinator-based wireless network.

However, since the number of coordinator-based wireless networks present within a fixed region is limited, the number of WUSB hosts is accordingly limited. For example, in a coordinator-based wireless network constructed based on the IEEE 802.15.3 standard, in which the number of communication channels available for use in a fixed region (10 m range) is limited to four (4), the maximum number of possible WUSB groups in the concerned region is four (4) since only one piconet can exist per communication channel.

Conventional WUSB technology has the problem that a plurality of WUSB hosts cannot be supported in a fixed region.

The present invention has been proposed to solve the problem described above, and an object of the present invention is to support a plurality of WUSB hosts in a single coordinator-based wireless network.

According to the present invention there is provided an apparatus and method as set forth in the appended claims. Preferred features of the invention will be apparent from the dependent claims, and the description which follows.

The above and other features and advantages of the present invention will become more apparent by describing in detail exemplary embodiments thereof with reference to the attached drawings in which:
Figure 1 illustrates a wireless network comprising an access point;
Figure 2 illustrates a wireless network in ad hoc mode;
Figure 3 illustrates a super frame that is managed by a WPAN coordinator;
Figure 4 illustrates a structure of a channel time request command according to an exemplary embodiment of the present invention;
Figure 5 illustrates a beacon frame according to an exemplary embodiment of the present invention;
Figure 6 illustrates a structure of a super frame according to an exemplary embodiment of the present invention;
Figure 7 is a block diagram illustrating a construction of a PNC according to an exemplary embodiment of the present invention;
Figure 8 is a block diagram illustrating a construction of a USB host according to an exemplary embodiment of the present invention;
Figure 9 is a flow chart illustrating channel allocation to a WUSB host according to an exemplary embodiment of the present invention; and
Figure 10 illustrates a piconet according to an exemplary embodiment of the present invention.

Hereinafter, specific aspects of the exemplary embodiments of the present invention will be covered by the detailed description and drawings of the specification. Advantages and features of the present invention and methods of accomplishing the same may be understood more readily by reference to the following detailed description of the exemplary embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification.

Hereinafter, exemplary embodiments of the present invention will be described in detail with reference to the accompanying drawings.

With regard to a coordinator-based wireless network, the Institute of Electrical and Electronics Engineers (IEEE) 802.15.3 proposes standards regarding a physical layer (PHY layer) and a medium access control (MAC) layer. The layers respectively correspond to a physical layer and a data link layer, among seven (7) layers of an open system interconnection (OSI) relative to a network model presented by the International Standardization Organization (ISO).

For better understanding, the present invention will be described based on an IEEE 802.15.3 wireless personal area network (WPAN) as an exemplary embodiment of a coordinator-based wireless network, on which the WUSB is based.

In the WPAN, a wireless network apparatus is referred to as a "device," a single wireless network composed of at least one device is referred to as a "piconet," and a device functioning as a coordinator in the piconet is referred to as a "piconet coordinator" (abbreviated as "PNC"). For consistency, the following WPAN description will employ these terms.

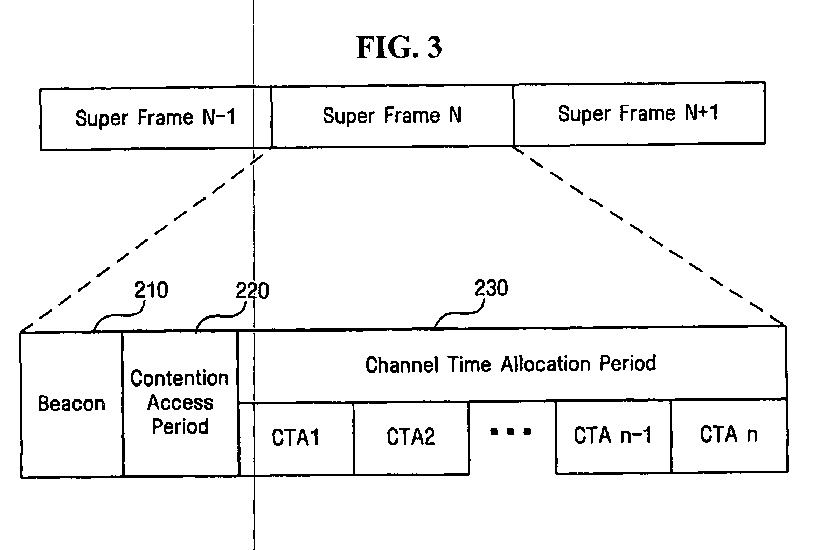

Figure 3 illustrates a super frame managed by a PNC in a WPAN.

Referring to this figure, a super frame comprises a beacon 210 including control information, a contention access period (CAP) 220 during which a channel is occupied through contention using backoff algorithm to thereby transmit data, and a channel time allocation period (CTAP) 230 during which data is transmitted without contention between devices for the time period allocated by a PNC. Part of the CTAP 230 may be replaced with a management CTA (Channel Time Allocation). At this time, a carrier sense multiple access/collision avoidance (CSMA/CA) algorithm is used in the CAP 220, whereas a slotted aloha protocol is used in the MCTA in order to occupy a channel.

Once a time-based disposition of a super frame is established by a PNC, as illustrated in Figure 3, devices of a piconet transmit data according to the established time-based disposition.

According to an exemplary embodiment of the present invention, a device may inform a PNC of its intention to function as a WUSB host. At this time, the PNC may allocate a part of the CTAP 230 to the WUSB host, and the WUSB host constructs a WUSB group with WUSB devices (e.g., peripheral devices supporting WUSB, such as a printer and a mouse), and transmits data in the CTAP allocated by the PNC.

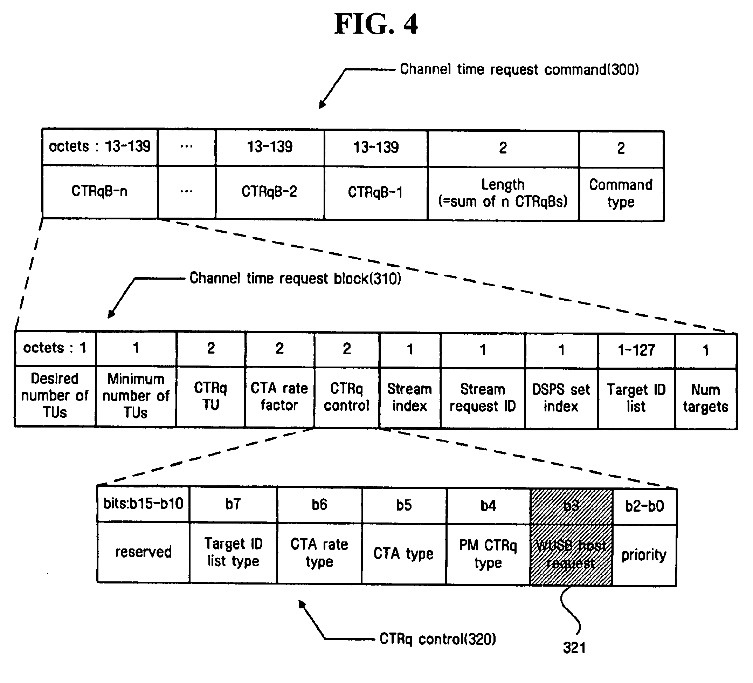

As an exemplary embodiment of the present invention, a device may convey its intention to function as a WUSB host along with a channel time request, as illustrated in Figure 4.

Figure 4 illustrates a structure of a channel time request command according to an exemplary embodiment of the present invention.

The WUSB host may transmit a frame for commanding a channel time request (channel time request command frame) 300, whereby the WUSB requests a PNC to allocate as much channel time as is needed in order to communicate with a WUSB device. The channel time request command frame 300 is used when devices following the IEEE 802.15.3 standard request a PNC to allocate channel time.

The channel time request command frame 300 consists of a "Command Type" field to indicate the kind of a command, a "Length" field to indicate the total number of octets occupied by one or more channel time request blocks (CTRqBs), and one or more CRTqBs containing the content to request the PNC to allocate channel time.

Each channel time request block 310 consists of a plurality of fields such as a "Num Targets" field, a "Desired number of TUs" field, and a channel time request control (CTRq control) field 320 which contains a variety of control information regarding a channel time request.

The CTRq control field 320 consists of subfields such as Priority, PM CRTq Type, CTA Type, CTA Rate Type, Target ID List Type. In addition to these conventional fields, a WUSB host request field 321 is added using 1 bit of a Reserved field.

The WUSB host request field 321 may be set to a value of 0 or 1. To represent the intention that a device transmitting the channel time request command frame will function as a WUSB host, the WUSB host request field 321 is set to "1." Otherwise, the WUSB host request field 321 is set to "0."

When the PNC, having received the above-described channel time request command 300 from the WUSB host, has allocated channel time to the WUSB host that requested the channel time or the channel time has not been allocated because of insufficient resources, the PNC may transmit a result pertaining to the channel time allocation request, using a channel time response command frame of the IEEE 802.15.3 standard.

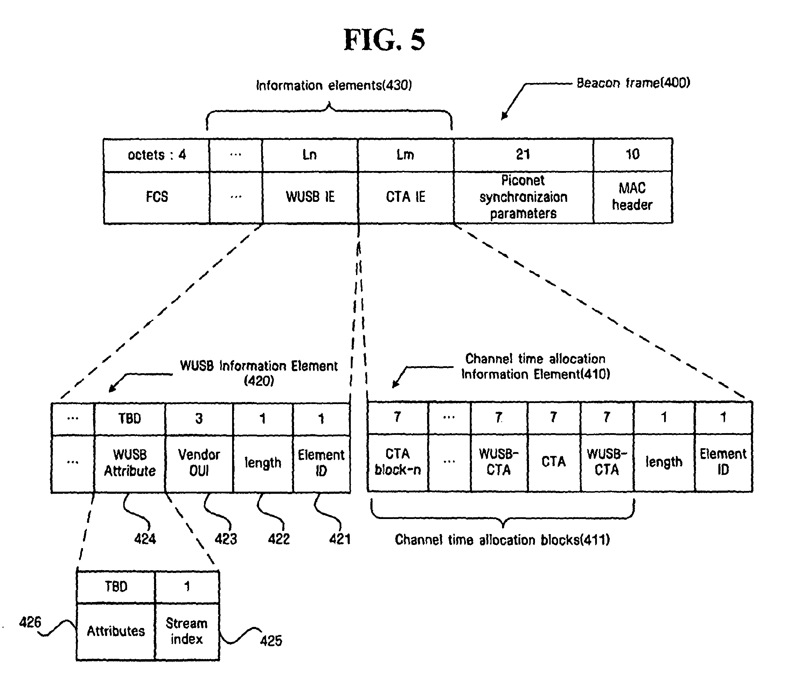

When the channel time has been allocated to the WUSB host, the PNC informs devices under its control within the piconet that the channel time has been allocated to the WUSB host. This information may be transmitted through a beacon, which will be described with reference to Figure 5.

Figure 5 illustrates a beacon frame according to an exemplary embodiment of the present invention.

After having received a channel time request command frame 300 from the WUSB host, the PNC allocates channel time to the WUSB host through a beacon, as illustrated in Figure 5, when communication resources are sufficient. The basic structure of this beacon frame may be identical to the beacon frame of the IEEE 802.15.3 standard.

Figure 5 illustrates structures of a beacon frame 400 including a channel time allocation information element (CTA IE) field 410, a WUSB information element (WUSB IE) field 420, and several information element fields 430.

The CTA IE 410 comprises one or more channel time allocation block (CTA block) fields 411. Each CTA block comprises a stream index field indicating the identity of data streams that it transmits, a CTA location field indicating a location of the CTA in a super frame, and a CTA duration field indicating the duration of the CTA. A part of the CTA blocks 411 are allocated to the WUSB host for WUSB group communications (WUSB-CTA), and an identifier of a device that will function as a WUSB host may be included in the WUSB-CTA field.

Information on a device that will function as a WUSB host in each WUSB-CTA is included in the WUSB IE 420.

In the WUSB IE 420, an Element ID field 421 sets an identifier to identify the WUSB IE field 420, and a length field 422 indicates the lengths of a Vendor OUI field 423 and a WUSB Attribute field 424. The Vendor OUI field 423 stores producer identification information of the WUSB host. In the WUSB Attribute field 424, a Stream index(SI) field 425 sets a stream index, and information regarding properties or the capability of the WUSB host is included in the Attribute field 426.

The WUSB devices that received a beacon containing the WUSB IE 420 from the PNC may select a stream index of the WUSB host to associate with through the WUSB IE 420. The WUSB devices may organize a WUSB group by selecting the stream index and transmitting an association request to the WUSB host in the allocated time (WUSB-CTA). In addition, the WUSB host schedules the WUSB-CTA period allocated to it and transceives data between the WUSB devices based on the scheduled channel time.

When there are plural WUSB hosts, the PNC may set channel information allocated to each WUSB host in the beacon. Accordingly, the maximum number of the WUSB Attribute fields of the WUSB IE 420 may equal the number of WUSB hosts present in a single piconet. According to another exemplary embodiment of the present invention, the maximum number of the WUSB IE field 420 within a single beacon frame may equal the number of WUSB hosts present in a single piconet.

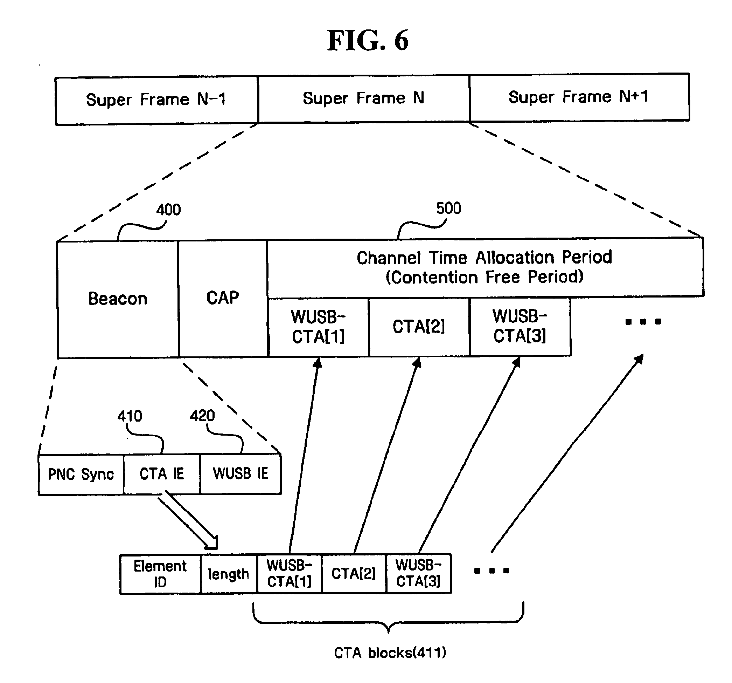

Figure 6 illustrates a structure of a super frame according to an exemplary embodiment of the present invention.

As illustrated, the beacon frame 400 in the super frame is identical to the beacon frame described with reference to Figure 5. As described above, the CTA blocks 411 of the CTA IE 410 included in the beacon frame 400 include information on channel time allocation (CTA) set in the CTAP, on which basis channel time of the CTAP 500 is allocated. The channel time request command 300, described with reference to Figure 4, is transmitted to the PNC, whereby the WUSB host, having received the channel time allocation, confirms the WUSB-CTA allocated to it through the beacon frame 400, and conducts WUSB group communications in the confirmed WUSB-CTA.

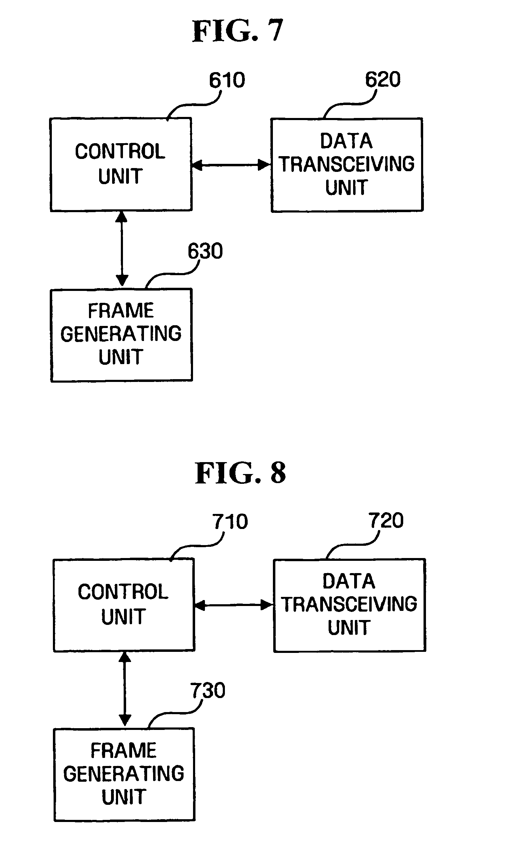

Figure 7 is a block diagram illustrating a construction of a PNC according to an exemplary embodiment of the present invention.

As illustrated, the PNC comprises a control unit 610, a data transceiving unit 620 and a frame generating unit 630.

Having received a request frame to function as a WUSB host from a WUSB host, the control unit 610 determines whether resources (channel time) are available for reservation. If sufficient resources are present, the control unit 610 allocates a WUSB-CTA that can be used by the WUSB host.

The data transceiving unit 620 transceives data with another device, and thus, a variety of frames may be sent or received through the data transceiving unit 620.

The frame generating unit 630 generates a response (frame) to the request from the WUSB host according to direction by the control unit 610. The response frame may be a channel time response command according to the IEEE 802.15.3 standard.

When the control unit 610 allocates channel time to the WUSB host, the frame generating unit 630 also generates an information frame to inform other devices of information regarding the allocated channel time. The information frame generated by the frame generating unit 630 may be a beacon frame as described with reference to Figure 5.

Figure 8 is a block diagram illustrating a WUSB host according to an exemplary embodiment of the present invention.

As illustrated, the WUSB host comprises a control unit 710, a transceiving unit 720 and a frame generating unit 730.

The control unit 710 controls the frame generating unit 730 and generates a predetermined request frame to be sent to the PNC. Having received channel time (e.g., WUSB-CTA), allocated from the PNC through the request frame, during which the WUSB host will function as a WUSB host, the control unit 710 schedules the allocated channel time and conducts communications with the WUSB devices. The control unit 710 may classify the channel time allocated to the WUSB host through the information frame sent from the PNC such as the beacon frame.

The data transceiving unit 720 transceives data with other devices, and thus, a variety of frames may be transmitted and received through the data transceiving unit 720.

The frame generating unit 730 generates a request frame in order to function as a WUSB host according to control by the control unit 710. The request frame may be the channel time request command 300 described with reference to Figure 4.

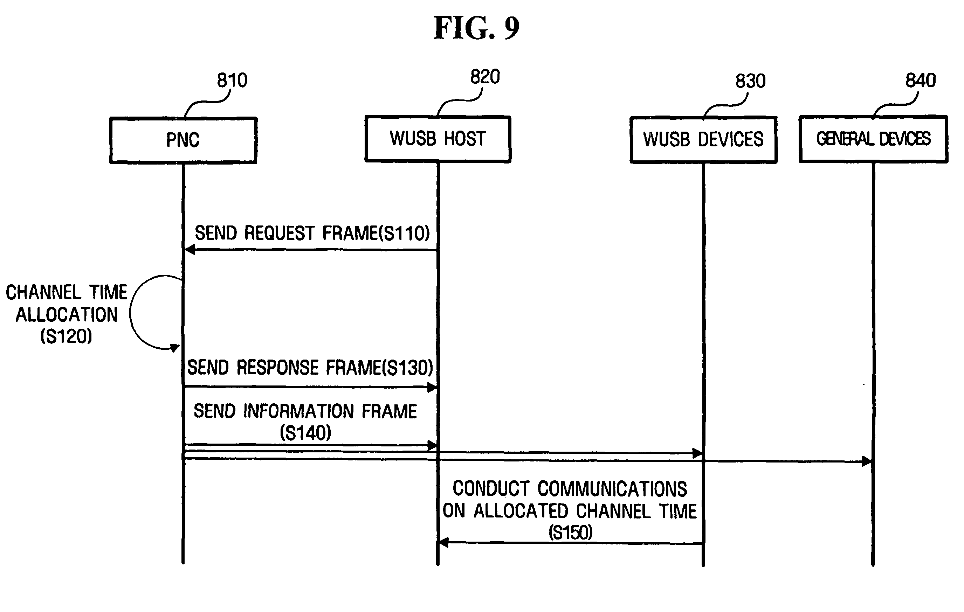

Operations of the PNC and the WUSB host will be described in more detail with reference to Figure 9.

Figure 9 is a flow chart illustrating the allocation of channel time to a WUSB host according to an exemplary embodiment of the present invention. In the Figure 9, WUSB host 820 and WUSB devices 830 support WUSB whereas general devices 840 do not support WUSB.

First, the WUSB host 820 sends the PNC 810 a request frame including information to request the role of WUSB host (S110). This request frame may be the channel time request frame 300 described above.

The PNC 810 that received the request frame from the WUSB host 820 determines whether resources are available for reservation, and, if there are available resources, it allocates a channel for the WUSB host (S120). Then, the PNC 810 sends a response frame to the WUSB host 820 (S130). The response frame may be the channel time response frame of IEEE 802.15.3, which includes information about whether to allocate channel time to the WUSB host.

The PNC 810 transmits to the devices 820, 830 and 840 within the piconet an information frame including information on the channel time allocated to the WUSB host 820 (S140). The information frame may be broadcasted, and this information frame may be the beacon frame 400 described above.

The WUSB host 820 that received the information frame can form a WUSB group with the WUSB devices 830, and it can communicate with them by use of the channel allocated to it S150.

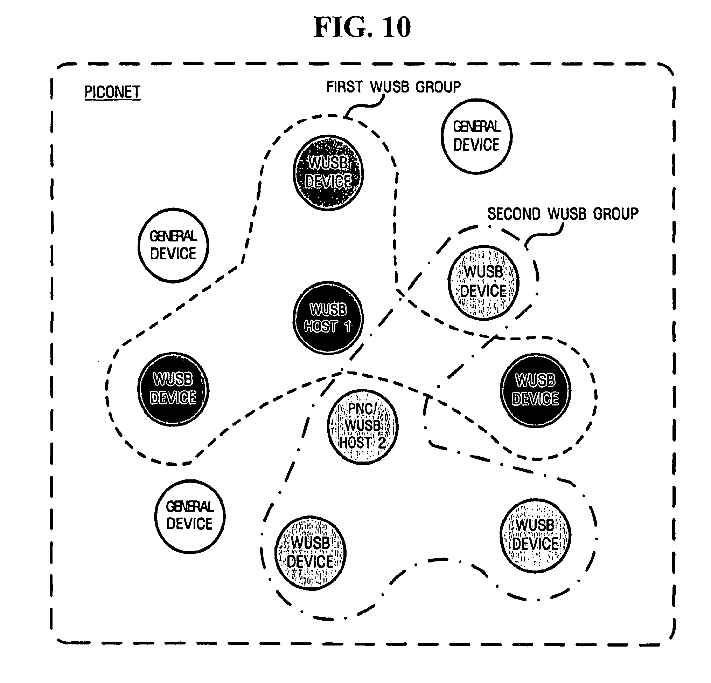

Figure 10 illustrates a piconet according to an exemplary embodiment of the present invention.

Through the operations described above, one or more WUSB hosts as well as the PNC may be present in a single piconet, and accordingly, one or more WUSB groups may be formed.

As described above, a method and an apparatus are provided for supporting a plurality of wireless universal serial bus (WUSB) hosts in a coordinator-based wireless network that are capable of supporting a plurality of WUSB hosts in a single coordinator-based wireless network.

Although a few preferred embodiments have been shown and described, it will be appreciated by those skilled in the art that various changes and modifications might be made without departing from the scope of the invention, as defined in the appended claims.

## Claims

1. A method for supporting a plurality of wireless universal serial bus (WUSB) hosts in a coordinator-based wireless network, comprising:
receiving a request frame (300) including information to request the role of WUSB host, from a specific device among devices that belong to the coordinator-based wireless network;
allocating a channel whereby the device having sent the request frame (300) can function as a WUSB host; and
transmitting an information frame (400) including information regarding the allocated channel to the devices that belong to the coordinator-based wireless network.

2. The method of claim 1, wherein the request frame (300) is the channel time request command frame specified by IEEE 802.15.3.

3. The method of claim 1, wherein the information frame (400) is a beacon frame.

4. The method of claim 3, wherein the beacon frame is the beacon frame specified by IEEE 802.15.3.

5. The method of claim 1, wherein the channel is a channel time included in a channel time allocation period of the super frame specified by IEEE 802.15.3

6. A method for supporting a plurality of wireless universal serial bus (WUSB) hosts in a coordinator-based wireless network, comprising:
sending a request frame (300) including information to request the role of WUSB host to a device that functions as a coordinator, among devices belonging to a coordinator-based wireless network;
receiving an information frame (400) including information regarding a channel that can be used by a WUSB host, allocated by the device functioning as a coordinator, having received the request frame (300); and
conducting communications with a WUSB device through a channel designated by the information regarding the channel, which is included in the received information frame (400).

7. The method of claim 6, wherein the request frame (300) is the channel time request command frame specified by IEEE 802.15.3.

8. The method of claim 6, wherein the information frame (400) is a beacon frame.

9. The method of claim 8, wherein the beacon frame is the beacon frame specified by IEEE 802.15.3.

10. The method of claim 6, wherein the channel is a channel time included in a channel time allocation period of a super frame specified by IEEE 802.15.3.

11. A coordinator-based wireless network apparatus, comprising:
a data transceiving unit (620) operable to transceive data with devices belonging to the coordinator-based wireless network;
a control unit (610) operable to allocate a channel whereby a specific device is capable of functioning as a WUSB host, depending upon resources of a communication medium, when a request frame (300) including information to request the role of WUSB host, is received from the specific device among the devices; and
a frame generating unit (630) operable to generate an information frame (400) including information regarding the channel allocated by the control unit (610) and to send the information frame (400) to devices belonging to the coordinator-based wireless network through the transceiving unit.

12. The apparatus of claim 11, wherein the request frame (300) is a channel time request command frame specified by IEEE 802.15.3.

13. The apparatus of claim 11, wherein the information frame (400) is a beacon frame.

14. The apparatus of claim 13, wherein the beacon frame is a beacon frame specified by IEEE 802.15.3.

15. The apparatus of claim 11, wherein the channel is a channel time included in a channel time allocation period of a super frame specified by IEEE 802.15.3.

16. A coordinator-based wireless network apparatus, comprising:
a data transceiving unit (720) operable to transceive data with devices belonging to the coordinator-based wireless network;
a frame generating unit (730) operable to generate a request frame (300) including information to request the role of WUSB host, and to send the request frame (300) to a device functioning as a coordinator, among the devices belonging to the coordinator-based wireless network, through the data transceiving unit (720); and
a control unit (710) operable to control communications with a WUSB host through a channel designated by information regarding the channel included in an information frame (400), when the information frame (400) is received, the information frame (400) includes the information regarding the channel that is used by the WUSB host and is allocated by the device functioning as the coordinator.

17. The apparatus of claim 16, wherein the request frame (300) is a channel time request command frame specified by IEEE 802.15.3.

18. The apparatus of claim 16, wherein the information frame (400) is a beacon frame.

19. The apparatus of claim 18, wherein the beacon frame is a beacon frame specified by IEEE 802.15.3.

20. The apparatus of claim 16, wherein the channel is a channel time included in a channel time allocation period of a super frame specified by IEEE 802.15.3.

## Patentansprüche

1. Verfahren zur Unterstützung einer Vielzahl von drahtlosen universellen seriellen Bus-Hosts (WUSB) in einem koordinatorbasierten drahtlosen Netzwerk, das umfasst:
Empfangen eines Anforderungsrahmens (300) einschließlich der Informationen zum Anfordern der Rolle des WUSB-Host von einem bestimmten der zum koordinatorbasierten drahtlosen Netzwerk gehörenden Geräte;
Zuweisen eines Kanals, wodurch das Gerät, das den Anforderungsrahmen (300) gesendet hat, als ein WUSB-Host fungieren kann; und
Senden eines Informationsrahmens (400) einschließlich der Informationen hinsichtlich des Kanals, der den Geräten, die zum koordinatorbasierten drahtlosen Netzwerk gehören, zugewiesen wurde.

2. Verfahren nach Anspruch 1, wobei der Anforderungsrahmen (300) der Befehlsrahmen zur Kanalzeitanforderung ist, der durch IEEE 802.15.3 spezifiziert ist.

3. Verfahren nach Anspruch 1, wobei der Informationsrahmen (400) ein Beacon-Rahmen ist.

4. Verfahren nach Anspruch 3, wobei der Beacon-Rahmen der durch IEEE 802.15.3 spezifizierte Beacon-Rahmen ist.

5. Verfahren nach Anspruch 1, wobei der Kanal eine Kanalzeit ist, die in einer Kanalzeitzuweisungsperiode des durch IEEE 802.15.3 spezifizierten Superrahmens enthalten ist.

6. Verfahren zur Unterstützung einer Vielzahl von drahtlosen universellen seriellen Bus-Hosts (WUSB) in einem koordinatorbasierten drahtlosen Netzwerk, das umfasst:
Senden eines Anforderungsrahmens (300) einschließlich der Informationen zur Anforderung der Rolle des WUSB-Hosts für eines der zum koordinatorbasierten drahtlosen Netzwerk gehörenden Geräte, das als Koordinator fungiert;
Empfangen eines Informationsrahmens (400) einschließlich der Informationen hinsichtlich eines Kanals, der von einem WUSB-Host genutzt werden kann und der von dem Gerät zugewiesen wurde, das als Koordinator fungiert, nachdem der Anforderungsrahmen (300) empfangen wurde, und
Ausführen der Kommunikation mit einem WUSB-Gerät durch einen Kanal, der durch die Informationen hinsichtlich des Kanals zugeordnet wurde, die in dem empfangenen Informationsrahmen (400) enthalten sind.

7. Verfahren nach Anspruch 6, wobei der Anforderungsrahmen (300) der Befehlsrahmen zur Kanalzeitanforderung ist, der durch IEEE 802.15.3 spezifiziert ist.

8. Verfahren nach Anspruch 6, wobei der Informationsrahmen (400) ein Beacon-Rahmen ist.

9. Verfahren nach Anspruch 8, wobei der Beacon-Rahmen der durch IEEE 802.15.3 spezifizierte Beacon-Rahmen ist.

10. Verfahren nach Anspruch 6, wobei der Kanal eine Kanalzeit ist, die in einer Kanalzeitzuweisungsperiode des durch IEEE 802.15.3 spezifizierten Superrahmens enthalten ist.

11. Koordinatenbasierte drahtlose Netzwerkvorrichtung, die umfasst:
eine Daten-Sende-Empfangs-Einheit (620), die betrieben werden kann, um Daten mit Geräten auszutauschen, die zum koordinatorbasierten drahtlosen Netzwerk gehören;
eine Steuereinheit (610), die betrieben werden kann, um einen Kanal zuzuweisen, wodurch ein bestimmtes Gerät in der Lage ist, als WUSB-Host zu fungieren, wenn, je nach den Ressourcen eines Kommunikationsmediums, ein Anforderungsrahmen (300) einschließlich Informationen zur Anforderung der Rolle des WUSB-Hosts von dem bestimmten Gerät der Geräte empfangen wurde und
eine einen Rahmen generierende Einheit (630), die betrieben werden kann, um einen Informationsrahmen (400) zu generieren, und zwar einschließlich der Informationen hinsichtlich des Kanals, der durch die Steuereinheit (610) zugewiesen wurde, sowie um den Informationsrahmen (400) mittels der Sende-Empfangs-Einheit an die Geräte zu senden, die zum koordinatorbasierten drahtlosen Netzwerk gehören.

12. Vorrichtung nach Anspruch 11, wobei der Anforderungsrahmen (300) ein Befehlsrahmen zur Kanalzeitanforderung ist, der durch IEEE 802.15.3 spezifiziert ist.

13. Vorrichtung nach Anspruch 11, wobei der Informationsrahmen (400) ein Beacon-Rahmen ist.

14. Vorrichtung nach Anspruch 13, wobei der Beacon-Rahmen ein durch IEEE 802.15.3 spezifizierte Beacon-Rahmen ist.

15. Vorrichtung nach Anspruch 11, wobei der Kanal eine Kanalzeit ist, die in einer Kanalzeitzuweisungsperiode eines durch IEEE 802.15.3 spezifizierten Superrahmens enthalten ist

16. Koordinatenbasierte drahtlose Netzwerkvorrichtung, die umfasst:
eine Daten-Sende-Empfangs-Einheit (720), die betrieben werden kann, um Daten mit Geräten auszutauschen, die zum koordinatorbasierten drahtlosen Netzwerk gehören;
eine einen Rahmen generierende Einheit (730), die betrieben werden kann, um einen Anforderungsrahmen (300) zu generieren, und zwar einschließlich der Informationen zur Anforderung der Rolle des WUSB-Host, sowie um den Anforderungsrahmen (300) mittels der Sende-Empfangs-Einheit (720) an eines der zum koordinatorbasierten drahtlosen Netzwerk gehörenden Geräte zu senden, das als Koordinator fungiert, und
eine Steuereinheit (710), die betrieben werden kann, um die Kommunikation mit einem WUSB-Host über einen Kanal zu steuern, der durch die Informationen hinsichtlich des Kanals zugeordnet wird, die in einem Informationsrahmen (400) enthalten sind, wenn der Informationsrahmen (400) empfangen wird, enthält der Informationsrahmen (400) die Informationen hinsichtlich des vom WUSB-Host verwendeten Kanals und wird von dem als Koordinator fungierenden Gerät zugewiesen.

17. Vorrichtung nach Anspruch 16, wobei der Anforderungsrahmen (300) ein Befehlsrahmen zur Kanalzeitanforderung ist, der durch IEEE 802.15.3 spezifiziert ist.

18. Vorrichtung nach Anspruch 16, wobei der Informationsrahmen (400) ein Beacon-Rahmen ist.

19. Vorrichtung nach Anspruch 18, wobei der Beacon-Rahmen ein durch IEEE 802.15.3 spezifizierte Beacon-Rahmen ist.

20. Vorrichtung nach Anspruch 16, wobei der Kanal eine Kanalzeit ist, die in einer Kanalzeitzuweisungsperiode eines durch IEEE 802.15.3 spezifizierten Superrahmens enthalten ist.

## Revendications

1. Procédé pour supporter une pluralité d'hôtes de bus série universel sans fil (WUSB) dans un réseau sans fil basé sur un coordonnateur, comportant les étapes consistant à :
recevoir une trame de demande (300) incluant des informations pour demander le rôle d'un hôte WUSB, depuis un dispositif spécifique parmi des dispositifs qui appartiennent au réseau sans fil basé sur un coordonnateur,
allouer un canal par lequel le dispositif ayant envoyé la trame de demande (300) peut fonctionner comme un hôte WUSB, et
transmettre une trame d'informations (400) incluant des informations se rapportant au canal alloué aux dispositifs qui appartiennent au réseau sans fil basé sur un coordonnateur.

2. Procédé selon la revendication 1, dans lequel la trame de demande (300) est la trame d'instruction de demande de temps de canal spécifiée par IEEE 802.15.3.

3. Procédé selon la revendication 1, dans lequel la trame d'informations (400) est une trame de balise.

4. Procédé selon la revendication 3, dans lequel la trame de balise est la trame de balise spécifiée par IEEE 802.15.3.

5. Procédé selon la revendication 1, dans lequel le canal est un temps de canal inclus dans une période d'allocation de temps de canal de la super-trame spécifiée par IEEE 802.15.3.

6. Procédé pour supporter une pluralité d'hôtes de bus série universel sans fil (WUSB) dans un réseau sans fil basé sur un coordonnateur, comportant les étapes consistant à :
envoyer une trame de demande (300) incluant des informations pour demander le rôle d'un hôte WUSB à un dispositif qui fonctionne comme un coordonnateur, parmi des dispositifs appartenant à un réseau sans fil basé sur un coordonnateur,
recevoir une trame d'informations (400) incluant des informations se rapportant à un canal qui peut être utilisé par un hôte WUSB, alloué par le dispositif fonctionnant comme un coordonnateur, ayant reçu la trame de demande (300), et
réaliser des communications avec un dispositif WUSB via un canal désigné par les informations se rapportant au canal, qui sont incluses dans la trame d'informations reçue (400).

7. Procédé selon la revendication 6, dans lequel la trame de demande (300) est la trame d'instruction de demande de temps de canal spécifiée par IEEE 802.15.3.

8. Procédé selon la revendication 6, dans lequel la trame d'informations (400) est une trame de balise.

9. Procédé selon la revendication 8, dans lequel la trame de balise est la trame de balise spécifiée par IEEE 802.15.3.

10. Procédé selon la revendication 6, dans lequel le canal est un temps de canal inclus dans une période d'allocation de temps de canal par une super-trame spécifiée par IEEE 802.15.3.

11. Dispositif de réseau sans fil basé sur un coordonnateur, comportant :
une unité d'émission-réception de données (620) opérationnelle pour émettre et recevoir des données à l'aide de dispositifs appartenant au réseau sans fil basé sur un coordonnateur,
une unité de commande (610) opérationnelle pour allouer un canal par lequel un dispositif spécifique peut fonctionner comme un hôte WUSB, en fonction des ressources d'un support de communication, lorsqu'une trame de demande (300) incluant des informations pour demander le rôle d'un hôte WUSB, est reçue depuis le dispositif spécifique parmi les dispositifs, et
une unité de génération de trame (630) opérationnelle pour générer une trame d'informations (400) incluant des informations se rapportant au canal alloué par l'unité de commande (610) et pour envoyer la trame d'informations (600) à des dispositifs appartenant au réseau sans fil basé sur un coordonnateur via l'unité d'émission-réception.

12. Dispositif selon la revendication 11, dans lequel la trame de demande (300) est une trame d'instruction de demande de temps de canal spécifiée par IEEE 802.15.3.

13. Dispositif selon la revendication 11, dans lequel la trame d'informations (400) est une trame de balise.

14. Dispositif selon la revendication 13, dans lequel la trame de balise est la trame de balise spécifiée par IEEE 802.15.3.

15. Dispositif selon la revendication 11, dans lequel le canal est un temps de canal inclus dans une période d'allocation de temps de canal d'une super-trame spécifiée par IEEE 802.15.3.

16. Dispositif de réseau sans fil à base de coordonnateur, comportant :
une unité d'émission-réception de données (720) opérationnelle pour émettre et recevoir des données à l'aide de dispositifs appartenant au réseau sans fil basé sur un coordonnateur,
une unité de génération de trame (730) opérationnelle pour générer une trame de demande (300) incluant des informations pour demander le rôle d'un hôte WUSB, et pour envoyer la trame de demande (300) à un dispositif fonctionnant comme un coordonnateur, parmi les dispositifs appartenant au réseau sans fil basé sur un coordonnateur, via l'unité d'émission-réception de données (720), et
une unité de commande (710) opérationnelle pour commander des communications avec un hôte WUSB via un canal désigné par des informations se rapportant au canal incluses dans une trame d'informations (400), lorsque la trame d'informations (400) est reçue, la trame d'informations (400) inclut les informations se rapportant au canal qui est utilisé par l'hôte WUSB et est alloué par le dispositif fonctionnant comme coordonnateur.

17. Dispositif selon la revendication 16, dans lequel la trame de demande (300) est une trame d'instruction de demande de temps de canal spécifiée par IEEE 802.15.3.

18. Dispositif selon la revendication 16, dans lequel la trame d'informations (400) est une trame de balise.

19. Dispositif selon la revendication 18, dans lequel la trame de balise est une trame de balise spécifiée par IEEE 802.15.3.

20. Dispositif selon la revendication 16, dans lequel le canal est un temps de canal inclus dans une période d'allocation de temps de canal d'une super-trame spécifiée par IEEE 802.15.3.
